# EUROPEAN PATENT APPLICATION

(11) **EP 3 972 085 A1**
(43) Date of publication of application: **23.03.2022**
(21) Application number: 20306062.9
(22) Date of filing: 18.09.2020
(51) Int. Cl.: H02J 50/00, H02J 50/10, H02J 50/60, H02J 7/00

(54) **WIRELESS INDUCTION CHARGERS**

(71) Applicant: EnerSys Delaware Inc., Reading, PA 19605 (US)
(72) Inventor: HOMBERT, Antoine, 62128 Croisilles (FR); DEHEM, Patrick, 62490 Vitry-en-Artois (FR); GORI, Paul-Antoine, 62000 Arras (FR); MÉTIVET, Nicolas, 80600 Doullens (FR); AZZABI ZOURAQ, Brahim, 6200 Arras (FR)
(74) Representative: Abel & Imray LLP

(57) **Abstract**

Measures, including methods and apparatus, for use in operating a wireless electromagnetic induction charger. Excitation of a primary charging coil of the wireless charger is caused to generate an electromagnetic field for wireless charging. The generated electromagnetic field induces a first voltage across a first detection coil and a second voltage across a second detection coil. A disparity between the first and second voltages is monitored. The disparity is caused by the presence of an object in the vicinity of the first or second detection coils. In response to the monitoring indicating a disparity, the excitation is caused to cease.

## Description

### Technical Field

The present disclosure concerns wireless electromagnetic induction chargers. More particularly, but not exclusively, this disclosure concerns a wireless charger, a method of operating a wireless charger, and a kit of parts for forming a foreign object detection system for a wireless charger.

### Background

A common technique for providing wireless power transfer (for example to charge or power a device) is by electromagnetic induction. A typical prior art wireless electromagnetic induction charger comprises a primary charging coil. When an alternating electric current (henceforth referred to as a primary coil current) is passed through the primary charging coil, an alternating electromagnetic field corresponding to the electric current is generated. The act of passing a current through a coil to generate an electromagnetic field is known as exciting the coil. The wireless charger typically includes charging control electronics configured to control the excitation of the primary charging coil. In some cases, the charging control electronics are configured to generate the primary coil current.

A typical device configured to be powered or charged by the wireless charger comprises a secondary coil. When the device is in range of the wireless charger, the generated electromagnetic field induces a voltage across the secondary coil, which drives a current through the secondary coil. The induced current can be used to power the device and / or charge a battery on the device. Thus, it can be said that the primary charging coil is configured to transmit power and the secondary coil is configured to receive power. It will be appreciated that, due to losses and inefficiencies, not all of the power transmitted by the primary charging coil is received at the secondary coil. Power is therefore wirelessly transferred from the charger to the device via an electromagnetic field. The primary charging coil and the secondary charging coil can each be considered to be a respective half of a transformer, such that bringing the two coils together forms a transformer.

Examples of devices which may be charged and / or powered by a wireless electromagnetic induction charger include portable electronics (such as mobile phones and laptops) and electric vehicles. It will be appreciated that the size of a wireless charger and the amount of power it is designed to transfer will depend on the type of device intended to be charged or powered by the charger.

However, if one or more foreign objects are positioned in close proximity to the charger whilst the charger is in operation, the electromagnetic field generated by the charger may induce eddy currents within the object. It will be appreciated that the term "foreign object" refers to objects not forming part of either the wireless charger or a device being powered or charged by the wireless charger (for example, coins, swarf, handheld tools, etc...). The eddy currents flowing within the object heat the object, potentially causing the object to become dangerously hot. This is a particular risk for conductive (for example, metal) objects. Eddy currents induced in a foreign object can raise the temperature of the object to the point that it causes damage to the charger and presents a thermal hazard to nearby people. Even after the charger has been switched off, the object may still pose a danger to nearby people, until such time as the heat has dissipated from the object.

The present disclosure seeks to mitigate the above-mentioned problems. Alternatively or additionally, the present disclosure seeks to provide an improved wireless charger and method of operating a wireless charger.

### Summary

According to a first aspect of the present disclosure there is provided a method of operating a wireless electromagnetic induction charger, the method comprising:
causing excitation of a primary charging coil of the wireless charger to generate an electromagnetic field for wireless charging, wherein the generated electromagnetic field induces a first voltage across a first detection coil and a second voltage across a second detection coil;
monitoring for a disparity between the first and second voltages, wherein the disparity is caused by the presence of an object in the vicinity of the first or second detection coils; and
in response to the monitoring indicating a disparity, causing the excitation to cease.

According to a second aspect of the disclosure there is provided a wireless charger comprising:
a primary charging coil;
charging control electronics configured to cause excitation of the primary charging coil to generate an electromagnetic field for wireless charging;
a first detection coil, arranged such that the generated electromagnetic field induces a first voltage across the first detection coil;
a second detection coil, arranged such that the generated electromagnetic field induces a second voltage across the second detection coil;
signal processing electronics configured to monitor for a disparity between the first voltage and the second voltage caused by the presence of an object in the vicinity of the first or second detection coils and, in response to the monitoring indicating a disparity, transmit to the charging control electronics a command to cause the excitation to cease.

According to a third aspect of the present disclosure, there is provided a kit of parts for forming an object detection system for a wireless electromagnetic induction charger, the wireless charger comprising a primary charging coil which, when excited, generates an electromagnetic field for wireless charging, the kit comprising:
a first detection coil, configured for mounting on the wireless charger such that the generated electromagnetic field induces a first voltage across the first detection coil;
a second detection coil, configured for mounting on the wireless charger such that the generated electromagnetic field induces a second voltage across the second detection coil; and
signal processing electronics configured to monitor for a disparity between the first voltage and the second voltage caused by the presence of an object in the vicinity of the first or second detection coils and, in response to the monitoring indicating a disparity, cause the excitation to cease.

It will of course be appreciated that features described in relation to one aspect of the present disclosure may be incorporated into other aspects of the present disclosure. For example, the method of the disclosure may incorporate any of the features described with reference to the apparatus of the disclosure and *vice versa.*

### Description of the Drawings

Embodiments of the present disclosure will now be described by way of example only with reference to the accompanying schematic drawings of which:
Figure 1 shows a perspective view of a wireless power transfer system according to embodiments of the present disclosure;
Figure 2 shows a functional block diagram of the wireless power transfer system of Figure 1 according to embodiments of the present disclosure;
Figure 3 shows a functional block diagram of signal processing electronics according to embodiments of the present disclosure;
Figure 4 shows a schematic view of a wireless charger according to embodiments of the present disclosure;
Figure 5 shows a schematic view of a wireless charger according to embodiments of the present disclosure; and
Figure 6 shows a flow chart illustrating a method according to embodiments of the present disclosure.

### Detailed Description

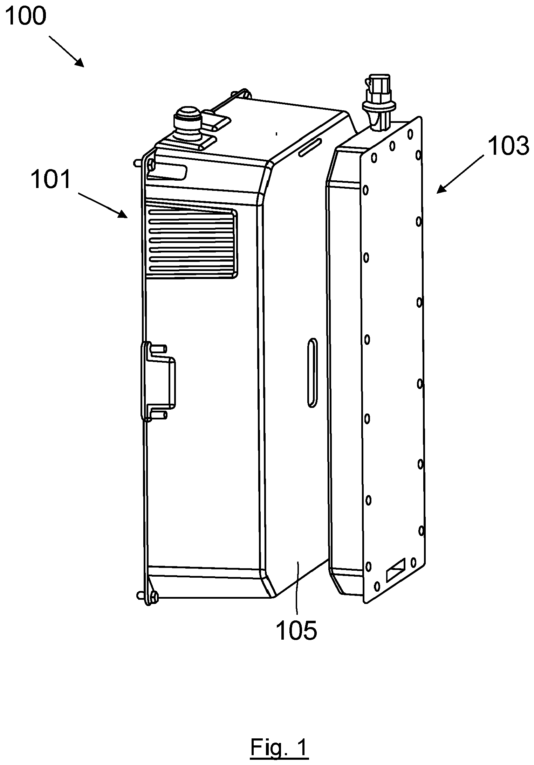

Figure 1 shows a perspective view of a wireless power transfer system 100 according to embodiments of the present disclosure. Wireless power transfer system 100 comprise a wireless charger 101 and a device 103 to be charged or powered by wireless charger 101. Wireless charger 101 comprises a charging pad 105. Charging pad 105 comprises a face of wireless charger 101 against which a corresponding face of device 103 is positioned in order to enable wireless power transfer from wireless charger 101 to device 103.

It will be appreciated that, whilst wireless charger 101 is illustrated with a vertically oriented charging pad 105, the orientation of wireless charger 101 and of charging pad 105 is unimportant. Wireless charger 101 may equally be arranged to lay flat, such that charging pad 105 is horizontally oriented. In such embodiments, device 103 may be positioned on or above charging pad 105 to enable powering or charging by wireless charger 101. Thus, in such embodiments, charging pad 105 may act as a platform for device 103 during charging. Where, for example, wireless power transfer system 100 is for charging an electric vehicle, wireless charger 101 may be arranged vertically (as illustrated), such that the electric vehicle is parked adjacent to wireless charger 101 for charging. Alternatively, wireless charger 101 may be arranged horizontally, such that the electric vehicle is parked above wireless charger 101 for charging.

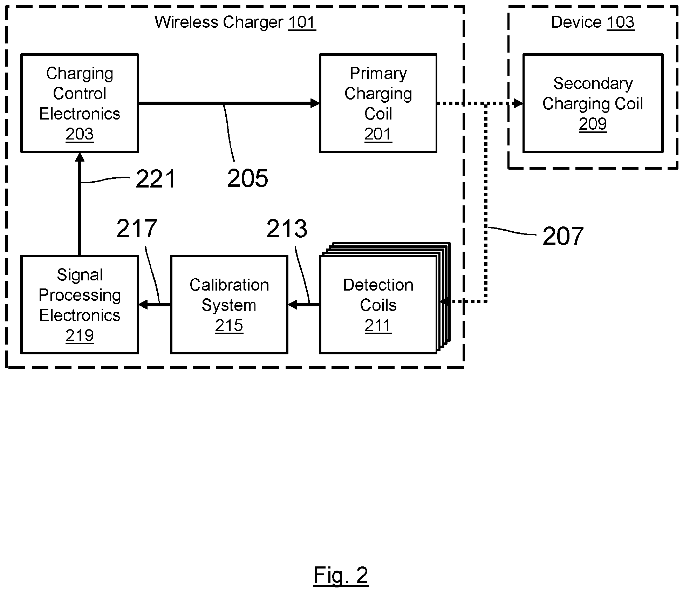

Figure 2 shows a functional block diagram of wireless power transfer system 100 according to embodiments of the present disclosure. Wireless charger 101 comprises a primary charging coil 201. In embodiments, primary charging coil 201 comprises an inductor. Thus, passing an electric current through primary charging coil 201 generates an electromagnetic field. It will be appreciated that the size and power rating of primary charging coil 201 depends on the specific application(s) for which wireless charger 101 is designed. Primary charging coil 201 is positioned behind (for example, immediately behind) charging pad 105. In embodiments, the dimensions and position of primary charging coil 201 can be considered to define charging pad 105 as a selected portion of a larger surface of wireless charger 101.

Wireless charger 101 further comprises charging control electronics 203. Charging control electronics 203 is configured to cause excitation of primary charging coil 201 to generate an electromagnetic field for wireless charging. In embodiments, charging control electronics 203 is configured to deliver a primary coil current 205 to primary charging coil 201. In such embodiments, primary coil current 205 causes the excitation of primary charging coil 201 and thereby controls the generated electromagnetic field. It will be appreciated that, to provide continual excitement of primary charging coil 201, the delivered primary coil current 205 comprises an alternating current.

In embodiments, charging control electronics 203 is configured to generate primary coil current 205, for example by operating a power converter. Thus, in embodiments, charging control electronics 203 comprises a power converter, for example a DC-AC power converter or an AC-AC power converter. In such embodiments, charging control electronics 203 are configured to excite primary charging coil 201. In alternative embodiments, primary coil current 205 is provided by a separate power supply (for example, external to wireless charger 101) and charging control electronics 203 operate to connect and disconnect primary charging coil 201 from the separate power supply. Thus, in embodiments, charging control electronics 203 is configured to act as a switch. In such embodiments, charging control electronics 203 may comprise a relay or other switching circuitry.

Primary charging coil 201, when excited by primary coil current 205, generates an electromagnetic field 207 for providing power transfer from wireless charger 101 to device 103. Device 103 comprise a secondary charging coil 209. Electromagnetic field 207 induces a voltage across secondary charging coil 209, which drives an electric current through secondary charging coil 209. The electric current induced through secondary charging coil 209 can be used to power and / or charge a battery on device 103. Thus, it can be said that primary charging coil 201 is configured to transmit power and the secondary charging coil 209 is configured to receive power. Power is therefore wirelessly transferred from wireless charger 101 to device 103 via electromagnetic field 207. Primary charging coil 201 and secondary charging coil 209 can each be considered to be a respective half of a transformer, such that bringing the primary charging coil 201 and secondary charging coil 209 together forms a transformer. It will be appreciated that, due to losses and inefficiencies, not all of the power sunk into primary charging coil 201 is received at secondary charging coil 209.

Wireless charger 101 also comprises a plurality of detection coils 211. Each of the plurality of detections coils 211 comprises an inductor. Therefore, each of the plurality of detections coils 211 is such that, when a given detection coil is placed in an alternating electromagnetic field, an alternating voltage is induced across the detection coil. The detection coils 211 are arranged within wireless charger 101 such that electromagnetic field 207 induces a respective voltage across each of the detection coils 211. In embodiments, plurality of detection coils 211 are positioned beneath charging pad 105. In such embodiments, plurality of detection coils 211 may be arranged symmetrically in relation to charging pad 105 (for example, such that charging pad 105 and plurality of detection coils 211 both share at least one line of symmetry). In embodiments, plurality of detection coils 211 are arranged symmetrically in relation to primary charging coils 201 (for example, such that primary charging coils 201 and plurality of detection coils 211 both share at least one line of symmetry).In embodiments, the plurality of detection coils 211 are notionally divided into one or more groups , such that the plurality of detections coils 211 can be said to comprise one or more groups of detection coils. In embodiments, the notional groups comprise pairs, such that plurality of detection coils 211 comprises one or more notional pairs of detection coils. In embodiments, the coils in a notional group of detection coils need not be physically grouped, and may be in separate locations on wireless charger 101. It may be that, for each of the groups of detections coils, the detection coils in the group are in separate locations on wireless charger 101, such that none of the detection coils 211 are located adjacent to the other coil(s) in their respective group. Thus, in embodiments, wireless charger 101 can be said to comprise a first detection coil and a second detection coil. In embodiments, the first detection coil and the second detection coil together comprise a notional group (or pair) of detection coils. The first and second detection coils are arranged such that the generated electromagnetic field induces a first voltage across the first detection coil and a second voltage across the second detection coil.

Placing a foreign object (for example, a metal object) within electromagnetic field 207 distorts the field in the vicinity of the foreign object. Thus, when a foreign object is placed within the vicinity of a detection coil, the voltage induced across the coil by electromagnetic field 207 is affected. Thus, an indication of the presence of a foreign object in the vicinity of a detection coil can be obtained by monitoring the induced voltage across the detection coil. In particular, by monitoring for a disparity between the induced voltage across a first detection coil in a pair and the induced voltage across a second detection coil in the pair, it is possible to detect the presence of a foreign object in the vicinity of one of the pair of detection coils.

It will be appreciated that references to "the vicinity" refer to a distance which is determined by a number of factors including the size of the foreign object, the power of wireless charger 101 (and thereby the strength of electromagnetic field 207), and the size of the relevant detection coil. For example, it may be that "the vicinity" refers to a distance of less than 20cm, less than 15cm, less than 10cm, or less than 5cm, etc.

In embodiments, wireless charger 101 comprises multiple notional groups (for example, pairs) of detection coils. Thus, in embodiments, wireless charger 101 comprises a third detection coil and a fourth detection coil. In embodiments, the third detection coil and the fourth detection coil together make up a second detection coil pair. In embodiments, the third and fourth detection coils are arranged such that electromagnetic field 207 induces a third voltage across the third detection coil and a fourth voltage across the fourth detection coil. In embodiments, the third and fourth detection coils are in a different location of wireless charger 101 to the first and second detection coils, such that the third and fourth detection coils can be said to cover a distinct portion of wireless charger 101 to the first and second detection coils. It will be appreciated that, in embodiments, detection coils 211 comprises significantly more than two notional groups (and therefore also more than four detection coils). In various embodiments, plurality of detection coils 211 comprises up to or more than 50 detection coils, more than 100 detection coils, more than 500 detection coils, or more than 1000 detection coils.

In embodiments, each coil in the plurality of detection coils 211 is electrically isolated from the other coils. Thus, in such embodiments, each notional group can be said to comprise a group (for example, a pair) of electrically isolated detection coils. In such embodiments, it is possible to detect the presence of a foreign object by comparing the ratio of the induced voltage across a first detection coil in the pair to that across the second coil.

In alternative embodiments, the detection coils in a notional group are connected in series. In embodiments, multiple notional groups of detection coils (for example, all of the plurality of detection coils 211) are connected in series. Thus, in embodiments, the first detection coil and the second detection coil are connected in series. In embodiments having third and fourth detection coils, it may be that the third and fourth detection coils are connected in series. In embodiments, the first, second, third, and fourth detection coils are all connected in series. The series connected detection coils can together be referred to as a detection coil network. Thus, in embodiments, plurality of detection coils 211 comprises one or more detection coil networks.

In embodiments, the first detection coil and the second detection coil have opposing polarities, such that the first voltage and the second voltage are substantially in anti-phase. Similarly, in embodiments, the third detection coil and the fourth detection coil may have opposing polarities, such that the third voltage and the fourth voltage are substantially in anti-phase. It will be appreciated by the skilled person that a single coil does not inherently have a polarity, but that two coils can have opposing polarities by virtue of their positions and orientations relative to the primary charging coil. In embodiments, the first detection coil and the second detection coil are arranged to have opposing polarities by coupling two like terminals of the detection coils. In embodiments, plurality of detection oils 211 comprises two subsets of detection coils: the detection coils in one subset having a positive polarity, and the detection coils in the other subset having a negative polarity. It will be appreciated that, in this context, "positive" and "negative" is used in relative terms to distinguish between the opposing polarities. In embodiments, plurality of detection coils 211 comprises an equal number of detection coils having a positive polarity to the number having a negative polarity, such that there are an equal number of detection coils having the two polarities. In embodiments, plurality of detection coils 211 are arranged such that an equal quantity of electric flux passes through the positive polarity detection coils to that passing through the negative polarity detection coils.

Where detection coils are connected in series, the output of the resulting detection coil network comprises the sum of the induced voltages associated with each of the detection coils in the group. Thus, in such embodiments, the output of the detection coil network comprises the sum of the first voltage and the second voltage. A change in the magnitude of one of the first and second voltages without a corresponding change in the other of the first and second voltages (for example, due to the presence of a foreign object in the vicinity of only one of the first and second detection coils) will yield a change in the output voltage of the detection coil network. Thus, by monitoring for variation in the output voltage of the detection coil network, it is possible to detect the presence of a foreign object.

Thus, in embodiments, monitoring for a disparity comprises monitoring a sum of the first and second voltages. Similarly, in embodiments having third and fourth detection coils, it may be that the monitoring comprises monitoring a sum of the third and fourth voltages. In embodiments, the monitoring comprising monitoring a sum of the first, second, third, and fourth voltages. In embodiments, the monitoring comprises monitoring a sum of all of the induced voltages from plurality of detection coils 211. Thus, in embodiments, the monitoring comprises monitoring a sum of up to or more than 50 induced voltages, more than 100 induced voltages, more than 500 induced voltages, or more than 1000 induced voltages. It will be appreciated that, where detection coils are connected in series, there is no increase in complexity associated with monitoring a greater number of detection coils.

In embodiments, the detection coil network is arranged such that the induced voltages sum to zero. Thus, in such embodiments, the presence of a foreign object can be inferred from a deviation from zero of the output voltage of the detection coil network. In embodiments, the plurality of detection coils in the detection coil network comprise multiple notional groups.

In embodiments, a notional group comprises (or consists of) two substantially identical detection coils having opposing polarities. In such embodiments, the two detection coils will generate induced voltages having the same magnitude, but which are in anti-phase, and therefore cancel each other out. Thus, in embodiments, the first detection coil and the second detection coil have opposing polarities, such that the first voltage and the second voltage are substantially in anti-phase.

In embodiments, a notional group of detection coils comprises more than two detection coils. For example, a notional group may comprise a first relatively large detection coil and two relatively small detection coils. Thus, the detection coils in a notional group need not necessarily be identical. In this example, it may be that two relatively small detection coils have the same polarity and are arranged (for example, by virtue of their size, position, and/or number of turns) to each generate an induced voltage having a magnitude of half that generated by a first relatively large detection coil. It may also be that a first relatively large detection coil has an opposing polarity to that of two relatively small coils, such that the induced voltages across the three detection coils sum to zero in the absence of foreign objects.

The skilled person will appreciate that there is no limit to the number of coils which can be notionally grouped in this way, or to the number of groups into which plurality of detection coils 211 may be notionally sub-divided. In embodiments, all of the coils in plurality of detection coils 211 are part of a single notional group. The skilled person will appreciate that embodiments having notional pairs of identical coils simplifies the design of a foreign object detection system according to embodiments of the present disclosure. The skilled person will also appreciate that, in embodiments having a number of notional groups of detection coils, the notional groups need not have the same number or relative sizes of coils. Indeed, each of the notional groups may have a configuration of detection coils which differs from one or more (for example, all) of the other notional groups.

It will be appreciated that, in embodiments, plurality of detection coils 211 is arranged in such a way that that the induced voltages across each of the coils in a notional group are not equal in the absence of foreign objects. Where a notional group comprises series connected detection coils (i.e. a detection coil network), a variation in the ratios of the induced voltages (for example, due to the presence of a foreign object) will present itself as a variation in the output voltage of the detection coil network. In such embodiments, the presence of a foreign object can be inferred from a deviation of the output voltage from an expected value. Where a notional group comprises a pair of electrically isolated detection coils, a variation in the ratio of the induced voltages can be identified by a simple comparison of the induced voltages. In such embodiments, it may be that variations in the output voltage due to factors other than the presence of a foreign object (for example, changes in environmental conditions) are compensated for by a calibration process.

In embodiments, the plurality of detection coils 211 are arranged to together span substantially a full height and width of charging pad 105. Thus, in such embodiments, detections coils 211 can be said to cover the whole of charging pad 105. In such embodiments, detection coils 211 can enable foreign object detection across all of charging pad 105. In embodiments, each coil in the plurality of detection coils 211 is arranged to cover a distinct region of wireless charger 101. In other embodiments, the regions covered by two or more detection coils overlap. In such embodiments, it may be that detection coils 211 are arranged in multiple layers, such that overlapping coils can be positioned in different layers. In embodiments, plurality of detection coils 211 are arranged in multiple layers, such that one or more coils in plurality of detection coils 211 is at a different distance from the surface of charging pad 105 to one or more (for example, all) of the other coils in the plurality.

In embodiments, the first and second detection coils are arranged on wireless charger 101 such that they are equidistant from primary charging coil 201. In embodiments, the first detection coil and the second detection coil are substantially identical. It will be appreciated that two detection coils will never be completely identical due to tolerances on component parameters due to variation in the manufacture process for the coils. In embodiments in which two substantially identical detection coils are positioned equidistant from primary charging coil 201, the induced voltages across the two detection coils (i.e. the first and second voltages) in the absence of a foreign object will be substantially equal. Thus, in such embodiments, the presence of a foreign object can be determined directly from a disparity between the first and second voltages.

In embodiments, detection coils 211 are positioned substantially coaxially to primary charging coil 201. It will be appreciated that the magnitude of the voltage induced in a given detection coil will depend, at least in part, on the relative orientations of primary charging coil 201 and the detection coils. Specifically, the magnitude of the induced voltage will be at its maximum when the detection coil is coaxial to primary charging coil 201, and at its minimum when an axis of the detection coil is perpendicular to that of primary charging coil 201. In embodiments, the axes of primary charging coil 201 and detection coils 211 are perpendicular to a plane of the charging pad. Such embodiments can provide increased sensitivity.

In embodiments, the plurality of detection coils 211 are positioned behind (for example, immediately behind) charging pad 105. In such embodiments, detection coils 211 may be positioned between charging pad 105 and primary charging coil 201. In other embodiments, detection coils 211 are positioned behind primary charging coil 201. It will be appreciated that different detection coils in the plurality of detection coils 211 may be positioned at different depths behind charging pad 105. For example, a first subset of the plurality of detection coils 211 may be positioned between charging pad 105 and primary charging coil 201, and a second subset of the plurality of detection coils 211 may be positioned behind primary charging coil 201. In embodiments, the coils in a notional group (for example, a pair) of detection coils are positioned at the same depth beneath charging pad 105. In alternative embodiments, the coils in a notional group of detection coils may be at separate depths beneath charging pad 105. In embodiments, detection coils 211 are arranged in one or more layers, the one or more layers being at differing depths beneath charging pad 105. The physical arrangement of detections coils 211 is referred to as a coil layout.

In embodiments (for example embodiments in which each notional group comprises a pair of electrically isolated detection coils), plurality of detection coils 211 outputs a plurality of induced voltages 213 (for example, one for each of the plurality of detection coils 211). In embodiments (for example, where all of detection coils 211 are connected in series), plurality of detection coils 211 outputs a single induced voltage 213 (corresponding to the sum of the voltages induced across each of the coils in plurality of detection coils 211). It will be appreciated that plurality of detection coils may include notional groups using a combination of the above two approaches, such that some of the plurality of notional groups comprise pairs of electrically isolated detection coils, whilst other notional groups comprise series-connected detection coils. It will also be appreciated that, in such embodiments, the output of plurality of detection coils 211 comprises multiple induced voltages. Induced voltages 213 are passed to signal processing electronics 219 for processing for the purposes of foreign object detection. In embodiments, induced voltages 213 are passed directly to signal processing electronics 219.

In embodiments where a notional group comprises a pair of electrically isolated detection coils (for example, in the system illustrated in Fig. 2), the induced voltages 213 associated with that pair are passed to signal processing electronics 219 via a calibration system 215. It will therefore be appreciated that calibration system 215 is an optional feature. The operation of calibration system 215 is discussed in greater detail below.

Signal processing electronics 219 is configured to monitor for a disparity between the voltages induced across the coils in a notional group of detection coils. Where a notional group comprises a pair of detection coils, signal processing electronics 219 may be configured to monitor for a disparity between the induced voltage across a first detection coil in the pair and that across the second detection coil in the pair. In such embodiments, monitoring the induced voltages may comprise comparison of the magnitude of the first voltage to the magnitude of the second voltage. Where a notional group comprises two or more detection coils in series, signal processing electronics 219 may be configured to monitor for a disparity between the sum of the induced voltages across coils in the group having a first polarity and that of the coils having the opposing polarity. It will be appreciated that, in such embodiments, a change to the induced voltage associated with any one of the coils in the group will result in a detectable disparity. In such embodiments, the monitoring may comprise summing all of the induced voltages and comparing the result with an expected value (which may, for example, be 0V). Thus, signal processing electronics 219 can be said to be configured to monitor for a disparity between the first voltage and the second voltage caused by the presence of an object in the vicinity of the first or second detection coils. A disparity between the first voltage and the second voltage indicates the presence of a foreign object in the vicinity of one of the detection coils in the notional group (for example, pair). Thus, signal processing electronics 219, in combination with at least detection coils 211, can be said to be configured to perform foreign object detection.

In embodiments, the disparity comprises a difference in the magnitudes of the first and second voltages. The presence of a foreign object in the vicinity of a detection coil may attenuate electromagnetic field 207 at the detection coil, causing a reduction in the voltage induced across the detection coil. Monitoring for a drop in a single induced voltage does not generally provide reliable foreign object detection, as the induced voltage can be affected by environmental factors such as humidity and the presence of dust particles. Furthermore, if a foreign object is present before charging is initiated, then the induced voltage will start at a reduced level from power-on and there will be little or no reduction in induced voltage to detect. Detecting a disparity between the induced voltages across two or more detection coils due to a foreign object in the vicinity of one of the coils allows detection of the foreign object in the presence of varying environmental conditions and where the foreign object is present before charging is initiated.

In embodiments comprising more than one notional group of detection coils (for example, multiple pairs), signal processing electronics 219 may be configured to monitor multiple notional groups of detection coil (for example, all of the notional groups).

In embodiments having pairs of electrically isolated detection coils, a given detection coil may form part of more than one detection coil pair. Thus, for example, a first detection coil may be paired with a second detection coil to form a first detection coil pair. In addition, the first detection coil may be paired with a third detection coil to form a second detection coil pair. Thus, the first detection coil is part of both the first and second detection coil pairs. The first and second detection coil pairs can be processed independently. Thus, although in such embodiments detection coils 211 are logically grouped into pairs, there is no requirement that those pairs be exclusive or that detection coils 211 comprise an even number of coils.

Signal processing electronics 219 is further configured to, in response to the monitoring indicating a disparity, transmit to charging control electronics 203 a command 221 to cause the excitation to cease. As has been previously mentioned, electromagnetic field 207 may induce eddy currents within nearby foreign objects. The eddy currents flowing within such objects cause their temperature to increase, potentially to the point that an object becomes dangerously hot. This is a particular risk for conductive (for example, metal) objects. A foreign object heated in this way can cause damage to wireless charger 101 and present a thermal hazard to nearby people. Stopping the excitation of primary charging coil 201 in response to detection of a foreign object prevents electromagnetic field 207 heating the foreign object and thereby creating a thermal hazard. The presently described system is particularly useful for industrial environments where the presence of airborne dust would inhibit the use of an IR camera based system to detect the heating of foreign objects. Furthermore, the presently described system does not require the foreign object to get hot for it to be detected. Thus, the hazard is prevented from arising at all, rather than merely being detected and mitigated.

In embodiments, signal processing electronics 219 is further configured to, in response to the detecting, emit a visible or audible warning. For example, signal processing electronics 219 may be configured to light a warning light and / or sound an audible warning alarm.

In embodiments (for example, where a notional group comprises a pair of electrically isolated detection coils), signal processing electronics 219 is configured to indicate a disparity when a difference in the magnitudes of the voltages induced across the coils in a notional group (for example, a pair) of detection coils exceeds a predetermined threshold. In embodiments (for example, where a notional group comprises series connected detection coils), signal processing electronics 219 is configured to indicate a disparity when a sum of the induced voltages in the notional group deviates from an expected value (for example, 0V) by more than a predetermined threshold. Thus, in embodiments, the indicated disparity comprises a difference between a magnitude of the first voltage and a magnitude of the second voltage exceeding a predetermined threshold.

In embodiments (for example, in those embodiments having more than one notional group of detection coils), signal processing electronics 219 is further configured to monitor a third voltage induced by electromagnetic field 207 across a third detection coil and a fourth voltage induced across a fourth detection coil. In embodiments, signal processing electronics 219 is configured to further monitor for a further disparity between the third and fourth voltages and, in response to the further monitoring indicating a further disparity, cause the excitation to cease. It will be appreciated that the disparity associated with the first and second detection coils and the further disparity associated with the third and fourth detection coils may be caused by the presence of a single foreign object. Thus, the disparity and the further disparity may each indicate the presence of a single foreign object.

In embodiments, the third and fourth detection coils comprise a further notional group of series connected detection coils. In such embodiments, it may be that signal processing electronics 219 is configured to monitor the output of this further notional group separately from that of the first and second detection coils. However, in alternative embodiments, the third and fourth detection coils are also connected in series with the first and second detection coils, such that the two notional groups can be said to be connected in series. In such embodiments, these two notional groups can together be treated as a single notional group. Thus, it may be that signal processing electronics 219 is configured to monitor a single voltage corresponding to the sum of the induced voltages from multiple notional groups.

It will be understood by the skilled person that, regardless of whether the detection coils in a notional group are series connected or electrically isolated from one another, the fundamental mode of operation of a foreign object detection system according to embodiments of the present disclosure is to detect relative changes (for example, due to the presence of a foreign output in the vicinity of one or more of the detection coils in the notional group) in the induced voltages across the coils in those notional groups. Signal processing electronics 219 is configured to monitor the induced voltages (either individually or as a sum total) to detect those relative changes.

Where signal processing electronics 219 is configured to monitor multiple notional groups of detection coils, it is possible to estimate a position of a foreign object based on the particular disparities associated with each of the notional groups of detection coils. Thus, in embodiments, signal processing electronics 219 is further configured to, on the basis of the indicated disparity, the indicated further disparity, and a known position of each of the first, second, third, and fourth detection coils, determine a position of the foreign object. Such embodiments can not only determine the presence of a foreign object in the vicinity of wireless charger 101, but also provide an indication of the location of the foreign object. Such an indication can assist a user in finding and removing the foreign object. It will be appreciated that such functionality may not be possible in embodiments where all of the plurality of detection coils 211 are connected in a single series.

As mentioned above, in embodiments in which one or more notional groups comprise a pair of electrically isolated detection coils, wireless charger 101 further comprises a calibration system 215, via which induced voltages 213 are passed to signal processing electronics 219. Calibration system 215 is configured to calibrate the induced voltages 213 output by the electrically isolated detection coils 211. In embodiments, calibration system 215 is operable to calibrate a pair of detection coils to compensate for a difference between one or more parameters of each of the detection coils in the pair. In embodiments, the calibration comprises applying a modifier to one or both of the induced voltages. In such embodiments, the modifier may act to adjust the induced voltages such that they sum to zero. Thus, in respect of the first and second detection coils, calibration system 215 can be said to be arranged to calibrate the first and second voltages to compensate for a difference between one or more parameters of the first and second detection coils, the calibration comprising applying a modifier to one or both of the first and second voltages such that the first and second voltages sum to zero. In embodiments, calibration system 215 is configured to calibrate a multiple pairs of detection coils (for example all of the pairs of detection coils). In embodiments, wireless charger 101 comprises multiple instances of calibration system 215 (for example, an instance for each pair of detection coils) in order to calibrate multiple pairs of detection coils.

Because electromagnetic field 207 decays in strength with increasing distance from primary charging coil 201, detection coils positioned at different distances from primary coil 201 will have different induced voltages. Detection coils that are arranged such that each of the detection coils in a pair are not equidistant from primary charging coil 201 can be said to be asymmetrically arranged. In embodiments, calibration system 215 operates to counteract differences in induced voltages resulting from differing distances of the detection coils from primary charging coil 201, thus simplifying the detection of foreign objects using asymmetrically arranged detection coils.

Similarly, differences in electrical parameters between the detection coils in a pair can result in different induced voltages across those detection coils. Differences in the electrical parameters may, for example, comprise variation in an inductance or an internal resistance of a detection coil. Such differences may arise due to the use of mismatched inductors as detection coils or due to component parameter tolerances. In embodiments, calibration system 215 operates to counteract differences in induced voltages resulting from differences in electrical parameters between the two coils in a pair of detection coils.

Differences in the structure of wireless charger 101 can also affect electromagnetic field 207. Thus, variation in the structure of wireless charger 101 around a detection coil can affect the magnitude of the voltage induced across that coil. In embodiments, calibration system 215 operates to counteract differences in induced voltages resulting from differences in the structure of wireless charger 101 around each of a pair of detection coils.

Thus, in embodiments, the one or more parameters compensated by calibration system 215 are associated with one or more of: distances of the first and second detection coils from the primary charging coil, electrical parameters of the detection coils, and physical parameters of the detection coils. It will be appreciated that a given coil pair may be affected by multiple (for example, all) of these factors, and that, in such cases, calibration system 215 may be operable to compensate for a net difference between two coils, the net difference being a sum of individual differences arising from each of the multiple factors.

In embodiments, calibrating a pair of detection coils comprises applying a modifier to one or both of the induced voltages, for example such that they sum to zero. In embodiments, applying the modifier comprises one or both of applying a scaling factor and adding an offset voltage.

In embodiments, calibration system 215 comprises a potentiometer. In such embodiments, the modifier, and thereby also the calibration, applied is set by adjusting the potentiometer. In embodiments, calibration system 215 comprises a software function. For example, it may be that the induced voltages are digitised for input into a processor, and that the processor applies in software a mathematical function to the input digitised voltages.

In embodiments, calibration system 215 does not directly modify the induced voltages 213, but instead adjusts one or more predetermined thresholds against which induced voltages 213 are compared. For example, in embodiments, signal processing electronics 219 is configured to implement calibration system 215 by adjusting one or more thresholds against which induced voltages 213 are compared. In such embodiments, a mismatched detection coil pair may be calibrated by adjusting one or more comparison thresholds for a measured disparity such that a deviation of the disparity from an expected range of values (for example, corresponding to the mismatch between the detection coils) indicates the presence of a foreign object.

In embodiments, calibration system 215 is calibrated manually, for example by an operator manually adjusting set points of one or more potential dividers or potentiometers for each detection coil or detection coil pair. In alternative embodiments, calibration system 215 is configured to perform an automatic calibration of detection coils 211, for example in response to user input or in response to power-on of wireless charger 101. In such embodiments, it may be that calibration system 215 is configured to calibrate detection coils 211 based on an assumption that charging pad 105 is free from foreign objects. In such cases, any disparity between voltages induced across detections coils in a pair can be attributed to mis-calibration. Thus, in embodiments, calibration system 215 is configured to detect any disparities between voltages induced across detections coils in a pair and, based on an assumption that the charging pad is free from foreign objects, compensate for the detected disparities without user input.

It will be appreciated that calibration system 215 is not essential, and that foreign object detection systems according to the present disclosure (for example, embodiments utilising matched pairs of detection coils arranged symmetrically about primary charging coil 201) can function without calibration system 215. The output of calibration system 215 is a plurality of calibrated voltages 217. It will be appreciated that, in embodiments including calibration system 215, calibrated voltages 217 are input into signal processing electronics 219, rather than induced voltages 213. Similarly, it will be appreciated that, where notional groups comprise series-connected detection coils, it may not be possible to calibrate individual detection coils by applying simple scaling factors or offsets. Therefore, in such embodiments calibration system 215 may be limited to adjusting an expected output value from a detection coil network (for example, to account for variation in environmental conditions) or may even be omitted altogether

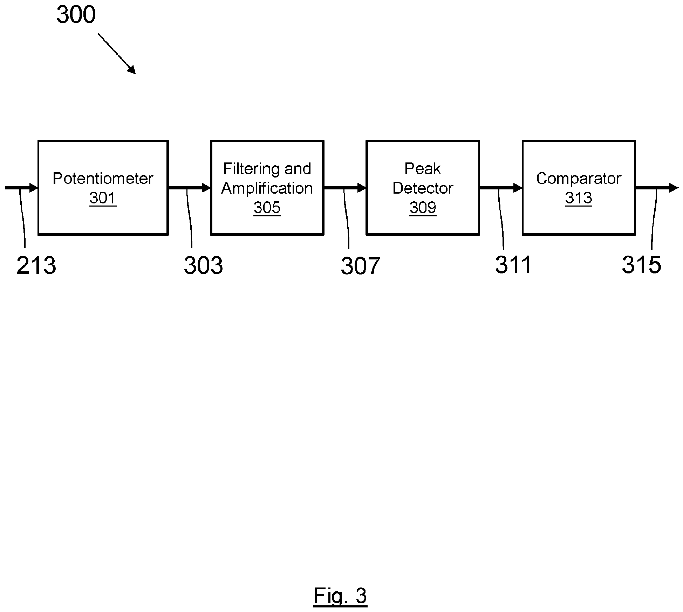

Figure 3 shows a functional block diagram of signal processing electronics 300 according to embodiments of the present disclosure. The example signal processing electronics 300 shown in Figure 3 is configured to monitor a notional pair of electrically isolated detection coils. Signal processing electronics 300 receives first and second induced voltages 213, the first and second induced voltages 213 deriving from respective first and second detection coils as previously described. The induced voltages 213 are received into a potentiometer 301. Potentiometer 301 is operable to attenuate each of first and second induced voltages 213 in order to calibrate the first and second detection coils. Thus, in embodiments, calibration system 215 comprises a potentiometer. By adjusting potentiometer 301, the relative magnitudes of the first and second induced voltages 213 can be adjusted. In this example, the first and second detection coils can be calibrated by ensuring that wireless charger 101 is free from foreign objects and then adjusting potentiometer 301 until the magnitudes of the first and second induced voltages 213 are equal. The output of potentiometer 301 is the difference between the first and second induced voltages after their respective attenuations by the resistors in potentiometer 301. Thus, in embodiments, calibrating the first and second detection coils comprises adjusting potentiometer 301 until its output voltage is substantially zero. Furthermore, in these embodiments, potentiometer 301 also operates to determine a disparity between the first and second induced voltages 213. The output of potentiometer 301 can therefore be considered to comprise an error voltage 303, indicating a magnitude of a disparity between the first and second voltages 213. Therefore, in these embodiments, potentiometer 301 can be considered to provide functionality of both calibration system 215 and elements of signal processing electronics 219.

In other embodiments (for example, where the coils in a notional group are connected in series), the output of plurality of detection coils 211 comprises a single induced voltage 213. Where plurality of detection coils 211 are arranged such that the induced voltages sum to zero, induced voltage 213 itself provides error voltage 303. Where the plurality of detection coils 211 are not arranged such that the induced voltages sum to zero, there may be an additional processing step of subtracting an expected value from induced voltage 213 (for example, by use of a summing amplifier) to determine error voltage 303.

In embodiments, error voltage 303 is passed through filtering and amplification module 305. Filtering and amplification module 305 operates to condition error voltage 303 to filter out electrical noise and to amplify error voltage 303 to facilitate further processing. The output of filtering and amplification module 305 is a conditioned error voltage 307. It will be appreciated that, because each of the first and second induced voltages 213 are alternating signals, error voltage 303 and conditioned error voltage 307 are also alternating signals.

Conditioned error voltage 307 is, in this example, input into a peak detector 309. Peak detector 309 converts conditioned error voltage 307 from an alternating current (AC) signal into a direct current (DC) signal corresponding to a peak value of conditioned error voltage 307. Thus, the output of peak detector 309 is DC voltage 311 associated with a magnitude of the disparity between the first and second induced voltages 213.

In this example, DC voltage 311 is fed into a comparator 313. Comparator 313 is configured to compare DC voltage 311 against a predetermined threshold. Comparator 313 is further configured to monitor DC voltage 311 and, if DC voltage 311 exceed the predetermined threshold, output an indication 315 that there is a disparity between the first and second induced voltages 213. Indication 315 can therefore also be considered to comprise an indication of the presence of a foreign object. In embodiments, indication 315 is passed to charging control electronics 203. In embodiments, charging control electronics 203 is configured to monitor for receipt of indication 315 and, in response to receipt of indication 315, stop exciting primary charging coil 201.

It will be appreciated that the embodiments illustrated in Figure 3 serve as an example, and that other implementations of calibration system 215 and / or signal processing electronics 219 are equally possible. For example, in embodiments, one or both of calibration system 215 and signal processing electronics 219 may be implemented in a software program. Thus, in embodiments, wireless charger 101 comprises a processor and associated memory for executing the software program.

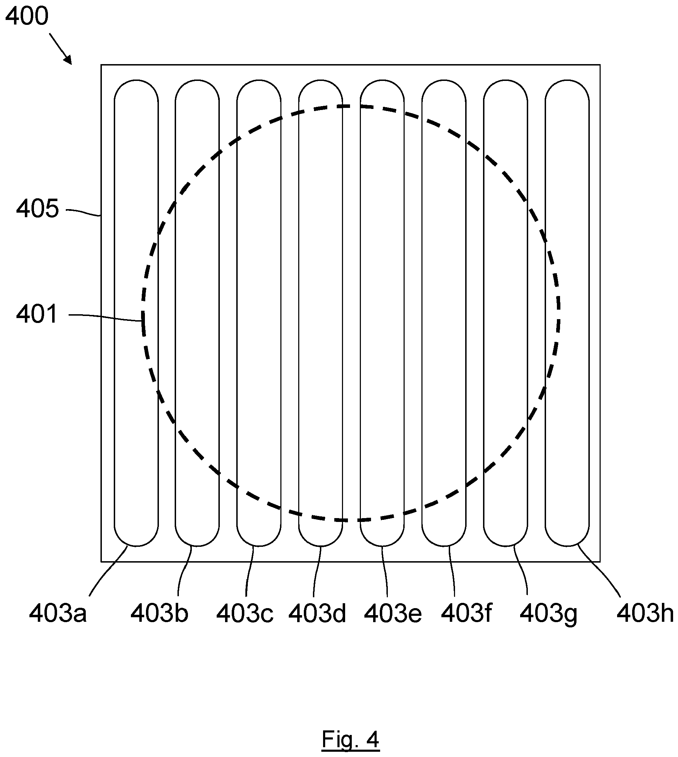

Figure 4 shows a schematic view of a wireless charger 400 according to embodiments of the present disclosure. Figure 4 illustrates an example arrangement of primary coil 401 and detection coils 403 (labelled 403a-403h respectively) on charging pad 405. In this example arrangement, each of detection coils 403 extends the full height of charging pad 405, but only across a width-wise portion of charging pad 405. Thus, in such embodiments, detection coils 403 are arranged in a single row. It will be appreciated that such an arrangement only permits the determination of the width-wise position of a foreign object, as each detection coil extends across substantially the full height of charging pad 405 and there is therefore no means to determine a height-wise position of the foreign object.

In embodiments having notional pairs of detection coils, it may be that none of detection coils 403 are positioned adjacent to their respective paired detection coils. Positioning paired detection coils adjacent to one another introduces a risk that a foreign object will be positioned on charging pad 405 in such a way as to affect both detection coils in a pair equally. In such a case, there would be no disparity between the voltages induced across the detection coils in the pair and therefore the foreign object would go undetected. It will be appreciated that in such embodiments, it is not possible to arrange the centre-most detection coils symmetrically without placing two paired coils adjacent to one another. Thus, in embodiments, calibration system 215 is configured to compensate for an asymmetric arrangement of one or more central detection coil pairs.

In the case of the coil layout shown in Figure 4, it may, for example, be that the outermost detection coils 403a, 403h form a first detection coil pair, and the second outermost coils 403b, 403g form a second detection coil pair. The inner four coils cannot be paired symmetrically without having a coil adjacent to its paired coil. Thus, the inner four coils may be paired asymmetrically, such that the left innermost coil 403d is paired with the right second innermost coil 403f and the right innermost coil 403e is paired with the left second innermost coil 403c.

In alternative embodiments, detection coils 403a and 403e form a first detection coil pair, detection coils 403b and 403d form a second detection coil pair, detection coils 403e and 403g form a third detection coil pair, and detection coils 403f and 403h form a fourth detection coil pair. Such embodiments can be more robust to misalignment of the primary and secondary charging coils.

In the illustrated example, each coil covers an equally sized portion of charging pad 405, however it will be appreciated that this need not be the case. Indeed, in embodiments including calibration system 215, even the two detection coils in a pair need not necessarily cover the same area of charging pad 405.

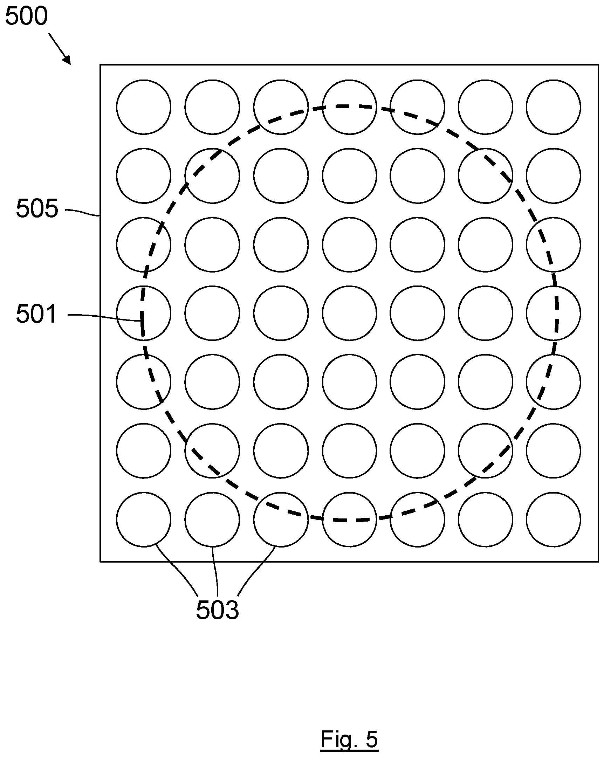

Figure 5 shows a schematic view of a wireless charger 500 according to embodiments of the present disclosure. Figure 5 illustrates an example arrangement of primary coil 501 and detection coils 503 on charging pad 505. Detection coils 503 can be said to be arranged in a matrix. Such embodiments can enable a determination of the position of a foreign object of charging pad 505 with respect to both its width- and height-wise directions. In other embodiments, all of detection coils 503 are connected in series. In such embodiments, it may be that detection coils 503 are arranged such that they alternate between opposing polarities both vertically and horizontally (like a checkerboard).

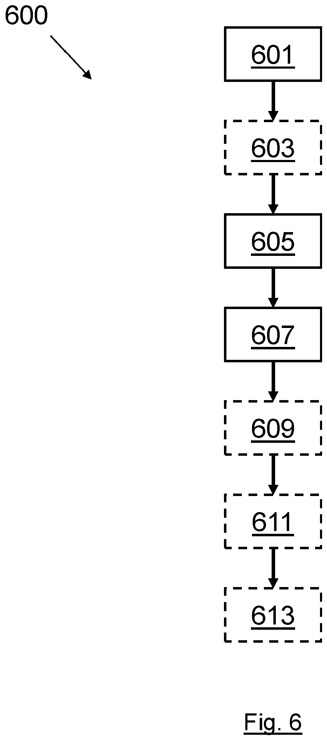

Figure 6 shows a flow chart illustrating a method 600 of operating a wireless electromagnetic induction charger according to embodiments of the present disclosure.

A first step of method 600, represented by item 601, comprises causing excitation of a primary charging coil of the wireless charger to generate an electromagnetic field for wireless charging. The generated electromagnetic field induces a first voltage across a first detection coil and a second voltage across a second detection coil. In embodiments, the first detection coil and the second detection coil are equidistant from the primary coil. In embodiments, the first detection coil and the second detection coil are substantially identical.

An optional second step of method 600, represented by item 603, comprises calibrating the first and second voltages to compensate for a difference between one or more parameters of the first and second detection coils. In embodiments, the calibrating comprises applying a modifier to one or both of the first and second voltages (for example, such that the first and second voltages sum to zero). In embodiments, the one or more parameters are associated with one or more of: distances of the first and second detection coils from the primary charging coil, electrical parameters of the detection coils, and physical parameters of the detection coils. In embodiments, applying the modifier comprises one or both of: applying a scaling factor and adding an offset voltage. Thus, in embodiments, the wireless charger comprises a calibration system. In such embodiments, it may be that the calibration system comprises a potentiometer and applying the modifier comprises adjusting a set point of the potentiometer.

A third step of method 600, represented by item 605, comprises monitoring for a disparity between the first and second voltages. The disparity is caused by the presence of an object in the vicinity of the first or second detection coils. In embodiments, monitoring for a disparity comprises detecting that a difference between a magnitude of the first voltage and a magnitude of the second voltage exceeds a predetermined threshold.

A fourth step of method 600, represented by item 607, comprises, in response to the monitoring indicating a disparity, causing the excitation to cease.

An optional fifth step of method 600, represented by item 609, comprises, in response to the detecting, emitting a visible or audible warning.

In embodiments, the generated electromagnetic field induces a third voltage across a third detection coil and a fourth voltage across a fourth detection coil. An optional sixth step of method 600, represented by item 611, may then comprise further monitoring for a further disparity between the third and fourth voltages, the further disparity being caused by the presence of the object in the vicinity of the third or fourth detection coils. In embodiments, method 600 further comprises, in response to the further monitoring indicating a further disparity, causing the excitation to cease.

An optional seventh step of method 600, represented by item 613, comprises, on the basis of the indicated disparity, the indicated further disparity, and a known position of each of the detection coils, determining an indication of a position of the obj ect.

Embodiments of the present disclosure also provide a kit of parts for forming an object detection system for a wireless electromagnetic induction charger. The wireless charger comprises a primary charging coil which, when excited, generates an electromagnetic field for wireless charging. The kit comprises a first detection coil, a second detection coil, and signal processing electronics. The first detection coil is configured for mounting on the wireless charger such that the generated electromagnetic field induces a first voltage across the first detection coil. The second detection coil is configured for mounting on the wireless charger such that the generated electromagnetic field induces a second voltage across the second detection coil. The signal processing electronics are configured to monitor for a disparity between the first voltage and the second voltage caused by the presence of an object in the vicinity of the first or second detection coils and, in response to the monitoring indicating a disparity, cause the excitation to cease.

Thus, the present disclosure provides a kit of parts for retrofitting a foreign object detection system to a pre-existing wireless charger (for example, a known wireless charger). In embodiments, the kit further comprises charging control electronics. In such embodiments, the charging control electronics may comprise a relay unit arranged to connect the wireless charger to its power supply. In this way, the charging control electronics are capable of preventing excitation of the primary charging coil by interrupting power supply to the wireless charger. Thus, in embodiments, the signal processing electronics is configured to cause the excitation to cease by transmitting an instruction to the charging control electronics to disconnect the wireless charger from the power supply. In alternative embodiments, signal processing electronics is configured to cause the excitation to cease by transmitting an instruction to the wireless charger to cease exciting the primary charging coil.

In embodiments, the signal processing electronics is provided with the charging control electronics in a single unit. It may be that signal processing electronics and charging control electronics share one or more component parts. In embodiments, the first detection coil and the second detection coil are configured for mounting onto a face of the wireless charger, for example onto a charging pad of the wireless charger. In embodiments, each of the detection coils are formed as a single unit, such that the relative arrangement of the detection coils is fixed by the construction of the unit. In alternative embodiments, each of the detection coils forms a distinct unit. In such embodiments, it may be that a calibration system is required in order to compensate for a particular user selected arrangement of the detection coils on the wireless charger. Thus, in embodiments, the kit of parts further comprises a calibration system, for example attached to the signal processing electronics charging control electronics and / or the detection coils.

Whilst the present disclosure has been described and illustrated with reference to particular embodiments, it will be appreciated by those of ordinary skill in the art that the disclosure lends itself to many different variations not specifically illustrated herein. By way of example only, certain possible variations will now be described.

Whilst, in some embodiments, a foreign object detection system as described above forms an integral part of a wireless charger, this is not necessarily so. Indeed, embodiments of the present disclosure include a kit of parts for retrofitting a foreign object detection system to a pre-existing wireless charger.

Whilst the described embodiments detail a particular implementation of calibration system 215 and signal processing electronics 219 using discrete electronic components, it will be appreciated that other implementations are also possible. For example, other implementations using discrete electronic components and implementations based on one or more computer programs are possible. Thus, in embodiments, one or more of signal processing electronics 219, calibration system 215, and charging control electronics 203 include a processor and associated memory for the purposes of running a computer program to implement some or all of the functionality of these subsystems.

Whilst signal processing electronics 219, calibration system 215, and charging control electronics 203 have been described as separate modules, it will be appreciated that, in embodiments, these modules share some or all of their component parts. Indeed, in some embodiments, each of signal processing electronics 219, calibration system 215, and charging control electronics 203 comprise a software function running on a single processing resource.

Whilst Figures 4 and 5 illustrate two possible detection coil configurations, it will be appreciated that many other configurations are also possible. In embodiments, one or more of the detection coils differs in size or shape from the other detection coils, such that the detection coils are not all of uniform size and shape. In embodiments, paired detection coils are of uniform size and shape but one or more pairs of the detection coils differs in size of shape from the other pairs.

Furthermore, whilst Figures 4 and 5 illustrate a two-dimensional coil layout (in that the detection coils are all positioned substantially within a plane), it will be appreciated that, in other embodiments, the detection coil layout includes a plurality of layers, such that one or more of the detection coils is positioned above or below one or more of the other detection coils. Such embodiments may be considered to have a three-dimensional coil layout. It will be appreciated that, in the illustrations of Figures 4 and 5, "above" and "below" each refer to a direction perpendicularly in or out of the page.

In embodiments, the coil layout comprises two layers, each having an arrangement of detection coils as shown in Figure 4, but with one of the two layers having been rotated by 90°. Thus, each coil in a first layer of detection coils spans substantially a full height of the charging pad, but only part of a width of the charging pad. Meanwhile, each coil in a second layer of detection coils spans substantially a full width of the charging pad, but only part of a height of the charging pad. Such a coil layout may allow both a height-wise and width-wise position of a foreign object on the charging pad to be determined.

Whilst in the described embodiments the detection coils are provided on the wireless charger, in other embodiments the detection coils are (alternatively or additionally) provided on the device to be charged. In such embodiments, the device may be configured to, in response to the detection coils indicating the presence of a foreign object, transmit a signal to the wireless charger indicating that it is unsafe to continue charging. The wireless charger may be configured to, in response to receipt of the signal, cease exciting the primary charging coil. In alternative embodiments, the device is configured to continually transmit a signal to the wireless charger indicating that it is safe to continue wireless charging when the detection coils indicate that no foreign object is present. Thus, the absence of the signal can indicate that a foreign object has been detected. In such embodiments, the wireless charger may be configured to, in response to an absence of the signal, cease exciting the primary charging coil. In embodiments, detection coils are provided on both the wireless charger and the device to be charged. In such cases, the wireless charger may be configured to cease exciting the primary charging coil if detection coils on either the wireless charger or the device indicate the presence of a foreign object.

Whilst the described embodiments, and in particular Figure 1, illustrate wireless charger 101 as having a particular orientation, it will be appreciated that other orientations of wireless charger 101 are also equally possible.

Embodiments of the present disclosure also provide circuitry (i.e. one or more circuits) for use in foreign object detection, the circuit comprising:
a primary charging coil;
charging control electronics configured to cause excitation of the primary charging coil to generate an electromagnetic field for wireless charging;
a first detection coil, arranged such that the generated electromagnetic field induces a first voltage across the first detection coil;
a second detection coil, arranged such that the generated electromagnetic field induces a second voltage across the second detection coil;
signal processing electronics configured to monitor for a disparity between the first voltage and the second voltage caused by the presence of an object in the vicinity of the first or second detection coils and, in response to the monitoring indicating a disparity, transmit to the charging control electronics a command to cause the excitation to cease.

Where in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

## Claims

1. A method of operating a wireless electromagnetic induction charger, the method comprising:
causing excitation of a primary charging coil of the wireless charger to generate an electromagnetic field for wireless charging, wherein the generated electromagnetic field induces a first voltage across a first detection coil and a second voltage across a second detection coil;
monitoring for a disparity between the first and second voltages, wherein the disparity is caused by the presence of an object in the vicinity of the first or second detection coils; and
in response to the monitoring indicating a disparity, causing the excitation to cease.

2. A method according to claim 1, wherein the indicated disparity comprises a difference between a magnitude of the first voltage and a magnitude of the second voltage exceeding a predetermined threshold.

3. A method according to any preceding claim, wherein the first and second detection coils have opposing polarities, such that the first voltage and the second voltage are substantially in anti-phase.

4. A method according to any preceding claim, wherein the first and second detection coils are substantially equidistant from the primary charging coil, such that the first voltage and the second voltage are of substantially equal magnitude.

5. A method according to any preceding claim, wherein the monitoring comprises monitoring a sum of at least the first voltage and the second voltage.

6. A method according to any preceding claim, wherein:
the generated electromagnetic field induces a third voltage across a third detection coil and a fourth voltage across a fourth detection coil; and
the method further comprises:
further monitoring for a further disparity between the third and fourth voltages, wherein the further disparity is caused by the presence of an object in the vicinity of the third or fourth detection coils; and
in response to the further monitoring indicating a further disparity, causing the excitation to cease.

7. A method according to claim 6, wherein the monitoring comprises monitoring a sum of at least the first voltage, the second voltage, the third voltage, and the fourth voltage.

8. A method according to any preceding claim, further comprising, in response to the detecting, emitting a visible or audible warning.

9. A wireless charger comprising:
a primary charging coil;
charging control electronics configured to cause excitation of the primary charging coil to generate an electromagnetic field for wireless charging;
a first detection coil, arranged such that the generated electromagnetic field induces a first voltage across the first detection coil;
a second detection coil, arranged such that the generated electromagnetic field induces a second voltage across the second detection coil;
signal processing electronics configured to monitor for a disparity between the first voltage and the second voltage caused by the presence of an object in the vicinity of the first or second detection coils and, in response to the monitoring indicating a disparity, transmit to the charging control electronics a command to cause the excitation to cease.

10. A wireless charger according to claim 9, wherein the first and second detection coils are substantially equidistant from the primary charging coil.

11. A wireless charger according to claims 9 or 10, wherein the first detection coil and the second detection coil are substantially identical.

12. A wireless charger according to any of claims 9 to 11, wherein the first detection coil and the second detection coil have opposing polarities, such that the first voltage and the second voltage are substantially in anti-phase.

13. A wireless charger according to claim 12, wherein the first detection coil and the second detection coil are connected in series.

14. A wireless charger according to any of claims 9 to 13, wherein the wireless charger comprises a plurality of detection coils, the plurality of detection coils being arranged to together span substantially a full height and width of the primary charging coil.

15. A kit of parts for forming an object detection system for a wireless electromagnetic induction charger, the wireless charger comprising a primary charging coil which, when excited, generates an electromagnetic field for wireless charging, the kit comprising:
a first detection coil, configured for mounting on the wireless charger such that the generated electromagnetic field induces a first voltage across the first detection coil;
a second detection coil, configured for mounting on the wireless charger such that the generated electromagnetic field induces a second voltage across the second detection coil; and
signal processing electronics configured to monitor for a disparity between the first voltage and the second voltage caused by the presence of an object in the vicinity of the first or second detection coils and, in response to the monitoring indicating a disparity, cause the excitation to cease.
